# EUROPEAN PATENT APPLICATION

(11) **EP 4 749 595 A1**
(43) Date of publication of application: **27.05.2026**
(21) Application number: 25215723.5
(22) Date of filing: 13.11.2025
(51) Int. Cl.: G07C 9/27, G07C 9/00, H04L 9/40, G06F 16/27, H04L 67/1095, H04L 67/12

(54) **SYNCHRONISING DATA BETWEEN A SHORE-SIDE ACCESS CONTROL DATABASE AND A SHIP-SIDE ACCESS CONTROL DATABASE**

(30) Priority: 22.11.2024 US 202463723619 P
(71) Applicant: ASSA ABLOY AB, 107 23 Stockholm (SE)
(72) Inventor: ELFSTRÖM, Jan, 261 61 Landskrona (SE); ALLANSSON, Fredrik, 244 65 Furulund (SE); JOHANSSON, Mikael, 223 62 Lund (SE)
(74) Representative: Kransell & Wennborg KB

(57) **Abstract**

It is provided a method for synchronising data between a shore-side access control database (4) and a ship-side access control database (6). The method comprises: determining (140) any modifications to data in the shore-side access control database (4); determining (40) any modifications to data in the ship-side access control database (6); transmitting (142) a shore modifications message (20), indicating the modifications to data in the shore-side access control database (4), to a ship-side server (5), operatively connected to the ship-side access control database (6); updating (46) the ship-side access control database with the shore-side modifications; transmitting (44) a ship modifications message (21), indicating the modifications to data in the ship-side access control database (6), to a shore-side server (3), operatively connected to the shore-side access control database (4); and updating (146) the shore-side access control database with the ship-side modifications.

## Description

### TECHNICAL FIELD

The present disclosure relates to the field of data management between shore and ship and in particular to synchronising data between a shore-side access control database and a ship-side access control database.

### BACKGROUND

In maritime environments, access control systems are crucial for controlling access to restricted spaces such as guest cabins, staff areas, etc. on ships. Access control for ships often involves managing a set of electronic keys and locks distributed across the vessel. However, maritime access control presents unique challenges, particularly due to the sometimes unreliable connectivity between ship-side systems and shore-side infrastructure, which may limit the effectiveness of data synchronisation and timely access control updates.

Credentials should be able to be created on shore, for instance, when guests check in. In this way, the guests can be provided with credentials prior to boarding the ship. Also, credentials should be able to be created on the ship, for instance, if a guest needs to move to another cabin.

### SUMMARY

One object is to provide a solution for synchronising data between a shore-side access control database and a ship-side access control database, even when a connection between the ship and the shore is unreliable.

According to a first aspect, it is provided a method for synchronising data between a shore-side access control database and a ship-side access control database. The method comprises: determining any modifications to data in the shore-side access control database; determining any modifications to data in the ship-side access control database; transmitting a shore modifications message, indicating the modifications to data in the shore-side access control database, to a ship-side server, operatively connected to the ship-side access control database; updating the ship-side access control database with the shore-side modifications; transmitting a ship modifications message, indicating the modifications to data in the ship-side access control database, to a shore-side server, operatively connected to the shore-side access control database; and updating the shore-side access control database with the ship-side modifications.

According to a second aspect, it is provided a method for synchronising data between a shore-side access control database and a ship-side access control database. The method is performed by a ship-side server, operatively connected to the ship-side access control database. The method comprises: determining any modifications to data in the ship-side access control database; receiving a shore modifications message from a shore-side server, the shore modifications message indicating modifications to data in the shore-side access control database; transmitting a ship modifications message, indicating the modifications to data in the ship-side access control database, to a shore-side server, operatively connected to the shore-side access control database; and updating the ship-side access control database with the shore-side modifications.

The ship-side modifications may be any modifications in the ship-side access control database since the most recent ship modifications message was sent to the shore-side server.

In the shore-side access control database and in the ship-side access control database, each entry defining an access right for a key for a lock may comprise a timestamp, and for all such entries associated with a single booking, the timestamps are identical.

The method may further comprise: obtaining a public key associated with the shore-side server; encrypting access right generation data, usable to generate access rights for locks under control of the ship-side server, wherein the encryption is based on the public key, yielding encrypted access right generation data; and transmitting the encrypted access right generation data to the shore-side server.

The method may further comprise: transmitting lock data for locks under control of the ship-side server to the shore-side server, the lock data comprising hardware details and/or software details of each lock.

According to a third aspect, it is provided a ship-side server for synchronising data between a shore-side access control database and a ship-side access control database, the ship-side server being configured to be operatively connected to the ship-side access control database. The ship-side server may comprise: processing circuitry; and memory circuitry storing instructions that, when executed by the processing circuitry, cause the ship-side server to: determine any modifications to data in the ship-side access control database; receive a shore modifications message from a shore-side server, the shore modifications message indicating modifications to data in the shore-side access control database; transmit a ship modifications message, indicating the modifications to data in the ship-side access control database, to a shore-side server, operatively connected to the shore-side access control database; and update the ship-side access control database with the shore-side modifications.

According to a fourth aspect, it is provided a computer program for synchronising data between a shore-side access control database and a ship-side access control database. The computer program comprises computer program code which, when executed on a ship-side server operatively connected to the ship-side access control database, causes the ship-side server to: determine any modifications to data in the ship-side access control database; receive a shore modifications message from a shore-side server, the shore modifications message indicating modifications to data in the shore-side access control database; transmit a ship modifications message, indicating the modifications to data in the ship-side access control database, to a shore-side server, shore-side server, operatively connected to the shore-side access control database; and update the ship-side access control database with the shore-side modifications.

According to a fifth aspect, it is provided a computer program product comprising a computer program according to the fourth aspect and a computer readable means comprising non-transitory memory in which the computer program is stored.

According to a sixth aspect, it is provided a method for synchronising data between a shore-side access control database and a ship-side access control database, the method being performed by a shore-side server, operatively connected to the shore-side access control database. The method comprises: determining any modifications to data in the shore-side access control database; transmitting a shore modifications message, indicating the modifications to data in the shore-side access control database, to a ship-side server, operatively connected to the ship-side access control database; receiving a ship modifications message from a ship-side server, the ship modifications message indicating the modifications to data in the ship-side access control database; and updating the shore-side access control database with the ship-side modifications.

The shore-side modifications may be any modifications in the shore-side access control database since the most recent shore modifications message was sent to the ship-side server.

In the shore-side access control database and in the ship-side access control database, each entry defining an access right for a key for a lock may comprise a timestamp. In this case for all such entries associated with a single booking, the timestamps are identical.

The method may further comprise: providing, to the ship-side server, a public key associated with the shore-side server; and receiving encrypted access right generation data from the ship-side server, the access right generation data being encrypted with the public key associated with the shore-side server.

The method may further comprise: receiving lock data for locks under control of the ship-side server to the shore-side server, the lock data comprising hardware details and/or software details of each lock.

According to a seventh aspect, it is provided a shore-side server for synchronising data between a shore-side access control database and a ship-side access control database, the shore-side server being configured to be operatively connected to the shore-side access control database. The ship-side access control database may comprise: processing circuitry; and memory circuitry storing instructions that, when executed by the processing circuitry, cause the ship-side access control database to: determine any modifications to data in the shore-side access control database; transmit a shore modifications message, indicating the modifications to data in the shore-side access control database, to a ship-side server, operatively connected to the ship-side access control database; receive a ship modifications message from a ship-side server, the ship modifications message indicating the modifications to data in the ship-side access control database; and update the shore-side access control database with the ship-side modifications.

According to an eighth aspect, it is provided a computer program for synchronising data between a shore-side access control database and a ship-side access control database. The computer program comprises computer program code which, when executed on a shore-side server operatively connected to the shore-side access control database, causes the shore-side server to: determine any modifications to data in the shore-side access control database; transmit a shore modifications message, indicating the modifications to data in the shore-side access control database, operatively connected to the ship-side access control database; receive a ship modifications message from a ship-side server, the ship modifications message indicating the modifications to data in the ship-side access control database; and update the shore-side access control database with the ship-side modifications.

According to a ninth aspect, it is provided a computer program product comprising a computer program according to the eighth and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a swimlane diagram illustrating embodiments of methods for synchronising data between a shore-side access control database and a ship-side access control database;
Fig 3 is a schematic diagram illustrating components of the shore-side server and the ship-side server of Fig 1 according to one embodiment; and
Fig 4 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, access control data is reliably synchronised between a shore-side access control database and a ship-side access control database, allowing both environments to maintain consistent and up-to-date access rights, even with intermittent network connectivity. By detecting modifications made on either side and transmitting these updates via synchronisation messages, the system ensures that any changes to access rights are reliably reflected on both the shore and ship, improving security and operational efficiency. This approach addresses the unique challenges of maritime communications, providing a reliable and robust solution for managing access control in shipboard environments.

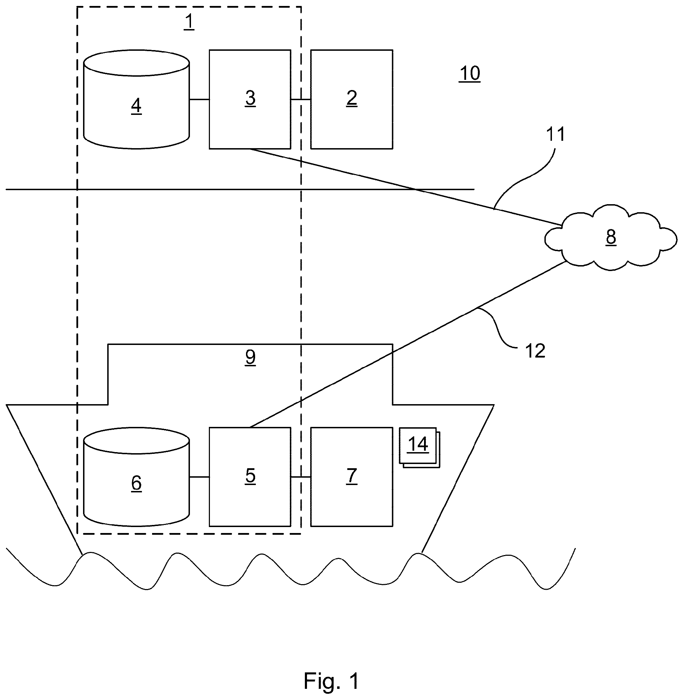

Fig 1 is a schematic diagram illustrating an environment in which embodiments presented herein can be applied. A system 1 is provided for synchronising access control data between a shore-side access control database 4 and a ship-side access control database 6. The system 1 spans over components both in a shore-side environment 10 and a ship 9.

The ship is provided with a plurality of locks 14. Each lock 14 controls access to a respective restricted physical space, which is any space for which access is to be controlled, such as for guest cabins, common spaces (gym, guest office space), staff areas, etc. Each lock 14 evaluates access by communicating with a credential. The credential can be carried on any suitable credential carrier, such as a smartcard, a key fob, a smartphone, wearable device, etc. The credential is a data item that enables the lock to evaluate access. The credential comprises a timestamp, which can e.g. be the time that the credential is issued or from when access is valid.

For locks where previous credentials should be invalidated, e.g. for guest cabins that are occupied by different guests over time, the timestamp of the credential is used for invalidation. Specifically, when such a lock 14 receives a credential with a timestamp, the lock 14 evaluates whether the timestamp is after the timestamp of the most recent previous valid credential. If the timestamp is the same, access will be granted, and no previous credentials will be invalidated. On the other hand, if the timestamp indicates a time later than the most recent previous valid credential, preceding credentials are invalidated.

This functionality is illustrated in the following use case. A first family receives credentials for cabin 506. The timestamp for all of these credentials is T1. During their stay, all members of the family have the same timestamp T1 on their credentials, whereby the lock for cabin 506 does not invalidate any credentials. The first family leaves the ship after their stay in the cabin. When a new family, a second family, checks in, they are given credentials with a later time stamp, T2. When someone in the new family unlocks the lock to cabin 506 with the timestamp T2 of their credential, the lock invalidates all the proceeding credentials (i.e. those that had the timestamp T1, of the first family). In this way, the credentials for the first family are conveniently invalidated simply by the second family opening the lock. This procedure does not depend on any online communication with the lock, a real-time clock in the lock, nor sequence numbers. Consequently, the procedure is suitable for an environment where credentials can be issued both on the ship and on shore.

There is a shore link 11 between a shore-side server 3 and the communication network 8. The shore link 11 can be based on a wired communication link, such as Ethernet and/or optical fibre connection. Alternatively or additionally, the shore link 11 can be based on a wireless communication link, such as Wi-Fi (e.g. any of the IEEE 802.11x standards) or a cellular network.

Furthermore, there is a ship link 12 between a ship-side server 5 and the communication network 8. The ship link 12 can be based on any one of the communication technologies mentioned for the shore link 11, which can be used when the ship 9 is docked, enabling both wire-based and cellular based communication. Furthermore, the ship link 12 can also be based on a satellite link, which provides greater coverage for when the ship is at sea, but can be a link that is less reliable, e.g. in terms of lower bandwidth, higher latency, and more sporadic in its availability, but can be used also when the ship 9 is at sea.

Through the communication network 8, the shore-side server 3 and the ship-side server 5 can communicate with each other. However, due to the reduced reliability of the ship link 12 the reliability of the connection between the shore-side server 3 and ship-side server 5 can be low, especially when the ship 9 is at sea, when the ship 9 can be far away from any land-based infrastructure, such as cellular networks.

In the shore-side environment 1, there is a shore-side access control database 4, the shore-side server 3 and one or more external shore-side systems 2.

The shore-side access control database 4 stores access rights and related data for controlling access to restricted areas onboard the ship 9. The shore-side access control database 4 is implemented using any type of digital storage and contains hardware and/or software to provide the storage capability.

The shore-side server 3 is operatively connected (e.g. via a wired or wireless communication link) to the shore-side access control database 4, and is configured to manage modifications to access rights, perform synchronisation tasks, and transmit updates. The shore-side server 3 can be any type of computer that can perform the tasks described for it herein. The shore-side server 3 can optionally be distributed across multiple physical devices, e.g. in a cloud service. Optionally, the shore-side server 3 and the shore-side access control database 4 are combined in the same physical device.

The one or more external shore-side systems 2 can comprise any system that interfaces with the shore-side server 3 and/or the shore-side access control database 4 for reading or modifying access rights for users to access locks on the ship 9. For instance, the external shore-side systems 2 can be used during check-in, to issue credentials to guests for cabins and other locks on the ship. The generated credentials are then reflected in the shore-side access control database 4. The external shore-side systems 2 can also be used for inventory control of the locks 14 and/or to plan maintenance and repairs.

On the ship 9, there is the ship-side access control database 6, the ship-side server 5 and one or more external ship-side systems 7.

The ship-side access control database 6 stores access control data locally on the ship, allowing onboard systems to enforce access rights, such as black lists (of credentials that should be denied access), etc. even when network connectivity to the shore is limited or intermittent. The ship-side access control database 6 is implemented using any type of digital storage and contains hardware and/or software to provide the storage capability.

The ship-side server 5 is operatively connected (e.g. via a wired or wireless communication link) to the ship-side access control database 6 and is configured to receive updates from the shore-side server 3 as well as transmit modifications made locally onboard the ship to the shore-side server 3. The ship-side server 5 can be any type of computer that can perform the tasks described for it herein. The ship-side server 5 can optionally be distributed across multiple physical devices, for redundancy and reliability reasons. Optionally, the ship-side server 5 and the ship-side access control database 6 are combined in the same physical device.

The one or more external ship-side systems 7 can comprise any system that interfaces with the ship-side server 5 and/or the ship-side access control database 6 for reading or modifying access rights for users to access locks on the ship 9. For instance, the external ship-side systems 7 can be used if a guest needs to switch cabins on the ship 9, to issue credentials to guests for cabins and other locks on the ship. The generated credentials are then reflected in the ship-side access control database 6.

The communication network 8 provides the connection between the shore-side and ship-side entities. Due to the nature of when the ship link 12 is used at sea, the ship link 12 may experience intermittent connectivity, bandwidth limitations, and/or increased latency. In order to address this, synchronisation processes implemented by the shore-side server 3 and the ship-side server 5 are provided herein to operate efficiently under these conditions, such that access control data remains consistent between the shore-side access control database 4 and the ship-side access control database 6 to the greatest extent possible.

In short, modifications made in the shore-side access control database 4 are identified by the shore-side server 3 and transmitted as a shore modifications message to the ship-side server 5. Similarly, any modifications made locally in the ship-side access control database 6 are identified by the ship-side server 5 and sent as a ship modifications message to the shore-side server 3. The bidirectional synchronisation ensures that access rights are consistent and up to date across both the shore-side and ship-side databases, thereby improving the security and operational efficiency of access control in maritime environments.

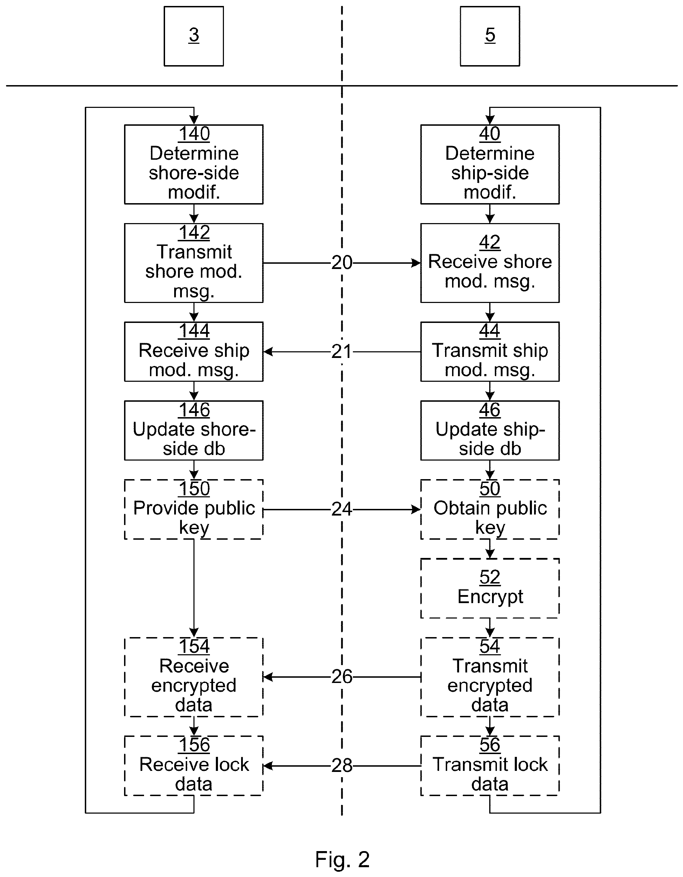

Fig 2 is a swimlane diagram illustrating embodiments of methods for synchronising data between the shore-side access control database 4 and the ship-side access control database 6. The swimlane diagrams can be considered to comprise a flow chart for methods performed by the shore-side server 3 on the left and a flow chart for methods performed by the ship-side server 5 on the right. Communication between the shore-side server 3 and the ship-side server 5 is also shown.

In one embodiment, each entry in the shore-side access control database 4 and the ship-side access control database 6 defines an access right for a key for a lock, where the access right comprises a timestamp. For all such entries associated with a single booking (e.g., for a family), the timestamps are identical, as described above with reference to Fig 1, to avoid the credential of one family member invalidating the credential of another family member.

In a *determine shore-side modifications* step 140, the shore-side server 3 identifies any modifications to data in the shore-side access control database 4. The shore-side modifications can be defined as any changes in the shore-side access control database 4 since the most recent shore modifications message was sent to the ship-side server 5, and optionally also for which receipt is confirmed by the ship-side server 5. The shore-side modifications thereby form the base for an incremental update mechanism.

In a *determine ship-side* modifications step 40, the ship-side server 5 identifies any modifications to data in the ship-side access control database 6. In congruence with the shore-side modifications, the ship-side modifications can be defined as any changes in the ship-side access control database 6 since the most recent ship modifications message was sent to the shore-side server 3, and optionally also for which receipt is confirmed by the shore-side server 3. As for step 140, these updates form the base for an incremental update mechanism, which can include updates both on shore and on ship.

In a *transmit shore modifications message* step 142, the shore-side server 3 transmits a shore modifications message 20, indicating the modifications to data determined in step 140 in the shore-side access control database 4, to the ship-side server 5. The transmission occurs when there is connectivity between the shore-side server 3 and the ship-side server 5. Since only the updates of the shore-side access control database 4 (and not the entire shore-side access control database 4) are transmitted, the amount of data that is transferred is limited and is suitable for when the ship link 12 is only intermittently available and possibly with quite limited bandwidth, e.g. when the ship 9 is at sea.

In a receive shore modifications message step 42, the ship-side server 5 receives the shore modifications message 20 from the shore-side server 3. As explained above, the shore modifications message 20 indicates modifications to data in the shore-side access control database 4. Optionally, the ship-side server 5 transmits a receipt confirmation to the shore-side server 3, e.g. as part of communication over transport control protocol (TCP) over internet protocol (IP). This allows the shore-side server 3 to retransmit any part of the shore modifications message 20 to the ship-side server 5 as needed to ensure that the entire shore modifications message 20 is properly received by the ship-side server 5.

In a *transmit ship modifications message* step 44, the ship-side server 5 transmits a ship modifications message 21, indicating the modifications to data determined in step 40 in the ship-side access control database 6, to the shore-side server 3. The shore-side server 3 is operatively connected to the shore-side access control database 4. This reciprocal message ensures that the shore-side system is kept up-to-date with the latest on-ship modifications of the access control data, enabling shore-side administrators to have full visibility and control over shipboard access.

In a *receive ship modifications message* step 144, the shore-side server 3 receives the ship modifications message 21 from the ship-side server 5. As explained above, the ship modifications message indicates the modifications to data in the ship-side access control database 6.

The order of steps 142-42 in relation to steps 44-144 is not important and may vary depending on network conditions and synchronisation policies, allowing for greater flexibility in adapting to the intermittent and unpredictable nature of maritime communication networks. The connection between the shore-side server 3 and the ship-side server 5 over the communication network 8 can be encrypted, e.g. be based on transport-layer security (TLS). Furthermore, the shore-side server 3 and/or ship-side server 5 can be configured to authenticate against the other server.

In an *update shore-side database* step 146, the shore-side server 3 updates the shore-side access control database 4 with the ship-side modifications. This ensures that any changes made on the ship are correctly reflected in the shore-side access control database 4, enabling near real-time visibility of access data for the ship for shore-based personnel.

In an *update ship-side database* step 46, the ship-side server 5 updates the ship-side access control database 6 with the shore-side modifications, ensuring that onboard access control policies are consistent with shore-based decisions, providing a synchronised and unified security protocol.

At this stage, the shore-side access control database 4 and the ship-side access control database 6 are synchronised, unless additional modifications have been made after steps 40 and 140, locally to the shore-side access control database 4 and/or the ship-side access control database 6. Nevertheless, any such additional modifications will be captured and synchronised in the next iteration. The resulting iterative asynchronous synchronisation approach allows the system to efficiently handle ongoing changes, providing continuous incremental alignment between the shore and ship environments. Any generation of credentials on the ship 9 can be performed conveniently and quickly locally, and do not depend online access to the shore-side server 3. The generated credentials are instead synchronised regularly to capture any updates that have been made. If data conflicts are detected, e.g. in the form of a double booking of a guest cabin, this can be flagged up for further investigation. Since the databases are synchronised, this enables e.g. the shore-side server 3 to control revoking of credentials, while still allowing credentials to be generated as needed on the ship 9.

In an optional *provide public key* step 150, the shore-side server 3 provides, to the ship-side server 5, a public key associated with the shore-side server 3. The public key can be provided in an explicit message to the ship-side server 5. Alternatively, the public key can be provided during installation of the shore-side server 3. Alternatively, the public key can be provided to a server, from which the shore-side server 3 can download the public key.

In an optional *obtain public key* step 50, the ship-side server 5 obtains the public key associated with the shore-side server 3.

In an optional *encrypt* step 52, the ship-side server 5 encrypts access right generation data, which is usable to generate access rights for locks under the control of the ship-side server 5. The encryption is based on the public key, yielding encrypted access right generation data.

In an optional *transmit encrypted data* step 54, the ship-side server 5 transmits the encrypted access right generation data 26 to the shore-side server 3. This ensures secure transfer of critical access control information, reducing the risk of tampering and enhancing data integrity.

In an optional *receive encrypted data* step 154, the shore-side server 3 receives the encrypted access right generation data 26 from the ship-side server 5. In line with the description above, the access right generation data is encrypted with the public key associated with the shore-side server 3.

The access right generation data is sensitive data upon which the locks 14 on the ship 9 are configured to evaluate credentials. Hence, in some embodiments, if the access right generation data is lost and new access generation data needs to be used to generate credentials, the locks need to be configured to accept credentials generated based on the new access generation data. By encrypting and transmitting the access generation data to the shore-side server 3, the shore-side server 3 can securely receive and store the access generation data as a backup. In this way, the access generation data can be reinstated for the ship-side server 5 if needed, achieving robust distributed control of the access control on the ship 9.

In an optional *transmit lock data* step 56, the ship-side server 5 transmits lock data 28 for locks under its control to the shore-side server 3. The lock data comprises hardware details and/or software details of each lock. For instance, the hardware details can include information about lock type, installed hardware modules, any malfunctions, etc. The software details can include information about firmware version, installed software modules, etc.

In an optional *receive lock data* step 156, the shore-side server 3 receives lock data 28 for locks under the control of the ship-side server 5. As explained above, the lock data 28 comprises hardware details and/or software details of each lock. When the shore-side server 3 receives the lock data, shore-side administrators can remotely monitor and lock configurations, enhancing oversight and enabling efficient scheduling of maintenance only for the locks that need it, to be performed during the short time period when the ship 9 is docked.

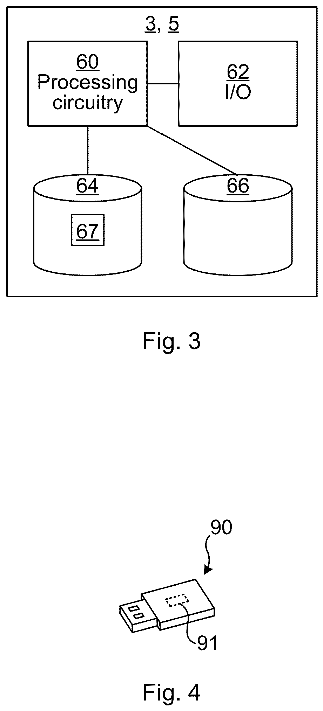

Fig 3 is a schematic diagram illustrating components of the shore-side server 3 and the ship-side server 5 of Fig 1 according to one embodiment. Processing circuitry 60 is provided using any combination of one or more of a suitable central processing unit (CPU), graphics processing unit (GPU), multiprocessor, neural processing unit (NPU), microcontroller, digital signal processor (DSP), etc., capable of executing software instructions 67 stored in memory circuitry 64, which can thus be a computer program product. The processing circuitry 60 could alternatively be implemented using an application specific integrated circuit (ASIC), field programmable gate array (FPGA), etc. The processing circuitry 60 can be configured to execute the method described with reference to Fig 2 above.

The memory circuitry 64 can be any combination of random-access memory (RAM) and/or read-only memory (ROM). The memory circuitry 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processing circuitry 60. The data memory 66 can be any combination of RAM and/or ROM.

An I/O interface 62 for communicating with external and/or internal entities. Optionally, the I/O interface 62 also includes a user interface.

Fig 4 shows one example of a computer program product 90 comprising computer readable means. On this computer readable means, a computer program 91 can be stored in a non-transitory memory. The computer program can cause processing circuitry to execute a method according to embodiments described herein. In this example, the computer program product 90 is in the form of a removable solid-state memory, e.g. a Universal Serial Bus (USB) drive. As explained above, the computer program product could also be embodied in a memory of a device, such as the computer program product 64 of Fig 3. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

It will now be presented a number of embodiments enumerated with roman numerals.
1. A method for synchronising data between a shore-side access control database and a ship-side access control database, the method comprising:
   determining any modifications to data in the shore-side access control database;
   determining any modifications to data in the ship-side access control database;
   transmitting a shore modifications message, indicating the modifications to data in the shore-side access control database, to a ship-side server, operatively connected to the ship-side access control database;
   updating the ship-side access control database with the shore-side modifications;
   transmitting a ship modifications message, indicating the modifications to data in the ship-side access control database, to a shore-side server, operatively connected to the shore-side access control database; and
   updating the shore-side access control database with the ship-side modifications.
ii. A method for synchronising data between a shore-side access control database and a ship-side access control database, the method being performed by a ship-side server, operatively connected to the ship-side access control database, the method comprising:
   determining any modifications to data in the ship-side access control database;
   receiving a shore modifications message from a shore-side server, the shore modifications message indicating modifications to data in the shore-side access control database;
   transmitting a ship modifications message, indicating the modifications to data in the ship-side access control database, to a shore-side server, operatively connected to the shore-side access control database; and
   updating the ship-side access control database with the shore-side modifications.
iii. The method according to claim ii, wherein the ship-side modifications are any modifications in the ship-side access control database since the most recent ship modifications message was sent to the shore-side server.
iv. The method according to claim ii or iii, wherein, in the shore-side access control database and in the ship-side access control database, each entry defining an access right for a key for a lock comprises a timestamp, and for all such entries associated with a single booking, the timestamps are identical.
v. The method according to according to any one of claims ii to iv, further comprising:
   obtaining a public key associated with the shore-side server;
   encrypting access right generation data, usable to generate access rights for locks under control of the ship-side server, wherein the encryption is based on the public key, yielding encrypted access right generation data; and
   transmitting the encrypted access right generation data to the shore-side server.
vi. The method according to any one of claims ii to v, further comprising:
   transmitting lock data for locks under control of the ship-side server to the shore-side server, the lock data comprising hardware details and/or software details of each lock.
vii. A ship-side server for synchronising data between a shore-side access control database and a ship-side access control database, the ship-side server being configured to be operatively connected to the ship-side access control database, the ship-side server comprising:
   processing circuitry; and
   memory circuitry storing instructions that, when executed by the processing circuitry, cause the ship-side server to:
      determine any modifications to data in the ship-side access control database;
      receive a shore modifications message from a shore-side server, the shore modifications message indicating modifications to data in the shore-side access control database;
      transmit a ship modifications message, indicating the modifications to data in the ship-side access control database, to a shore-side server, operatively connected to the shore-side access control database; and
      update the ship-side access control database with the shore-side modifications.
viii. A computer program for synchronising data between a shore-side access control database and a ship-side access control database, the computer program comprising computer program code which, when executed on a ship-side server operatively connected to the ship-side access control database, causes the ship-side server to:
   determine any modifications to data in the ship-side access control database;
   receive a shore modifications message from a shore-side server, the shore modifications message indicating modifications to data in the shore-side access control database;
   transmit a ship modifications message, indicating the modifications to data in the ship-side access control database, to a shore-side server, shore-side server, operatively connected to the shore-side access control database; and
   update the ship-side access control database with the shore-side modifications.
ix. A computer program product comprising a computer program according to claim viii and a computer readable means comprising non-transitory memory in which the computer program is stored.
x. A method for synchronising data between a shore-side access control database and a ship-side access control database, the method being performed by a shore-side server, operatively connected to the shore-side access control database, the method comprising:
   determining any modifications to data in the shore-side access control database;
   transmitting a shore modifications message, indicating the modifications to data in the shore-side access control database, to a ship-side server, operatively connected to the ship-side access control database;
   receiving a ship modifications message from a ship-side server, the ship modifications message indicating the modifications to data in the ship-side access control database; and
   updating the shore-side access control database with the ship-side modifications.
xi. The method according to claim x, wherein the shore-side modifications are any modifications in the shore-side access control database since the most recent shore modifications message was sent to the ship-side server.
xii. The method according to claim x or xi, wherein, in the shore-side access control database and in the ship-side access control database, each entry defining an access right for a key for a lock comprises a timestamp, and for all such entries associated with a single booking, the timestamps are identical.
xiii. The method according to according to any one of claims x to xii, further comprising:
   providing, to the ship-side server, a public key associated with the shore-side server; and
   receiving encrypted access right generation data from the ship-side server, the access right generation data being encrypted with the public key associated with the shore-side server.
xiv. The method according to any one of claims x to xiii, further comprising:
   receiving lock data for locks under control of the ship-side server to the shore-side server, the lock data comprising hardware details and/or software details of each lock.
xv. A shore-side server for synchronising data between a shore-side access control database and a ship-side access control database, the shore-side server being configured to be operatively connected to the shore-side access control database, the ship-side access control database comprising:
   processing circuitry; and
   memory circuitry storing instructions that, when executed by the processing circuitry, cause the ship-side access control database to:
      determine any modifications to data in the shore-side access control database;
      transmit a shore modifications message, indicating the modifications to data in the shore-side access control database, to a ship-side server, operatively connected to the ship-side access control database;
      receive a ship modifications message from a ship-side server, the ship modifications message indicating the modifications to data in the ship-side access control database; and
      update the shore-side access control database with the ship-side modifications.
xvi. A computer program for synchronising data between a shore-side access control database and a ship-side access control database, the computer program comprising computer program code which, when executed on a shore-side server operatively connected to the shore-side access control database, causes the shore-side server to:
   determine any modifications to data in the shore-side access control database;
   transmit a shore modifications message, indicating the modifications to data in the shore-side access control database, operatively connected to the ship-side access control database;
   receive a ship modifications message from a ship-side server, the ship modifications message indicating the modifications to data in the ship-side access control database; and
   update the shore-side access control database with the ship-side modifications.
xvii. A computer program product comprising a computer program according to claim xvi and a computer readable means comprising non-transitory memory in which the computer program is stored.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for synchronising data between a shore-side access control database (4) and a ship-side access control database (6), the method comprising:
determining (140) any modifications to data in the shore-side access control database (4);
determining (40) any modifications to data in the ship-side access control database (6);
transmitting (142) a shore modifications message (20), indicating the modifications to data in the shore-side access control database (4), to a ship-side server (5), operatively connected to the ship-side access control database (6);
updating (46) the ship-side access control database with the shore-side modifications;
transmitting (44) a ship modifications message (21), indicating the modifications to data in the ship-side access control database (6), to a shore-side server (3), operatively connected to the shore-side access control database (4); and
updating (146) the shore-side access control database with the ship-side modifications.

2. A method for synchronising data between a shore-side access control database (4) and a ship-side access control database (6), the method being performed by a ship-side server (5), operatively connected to the ship-side access control database (6), the method comprising:
determining (40) any modifications to data in the ship-side access control database (6);
receiving (42) a shore modifications message (20) from a shore-side server (3), the shore modifications message (20) indicating modifications to data in the shore-side access control database (4);
transmitting (44) a ship modifications message (21), indicating the modifications to data in the ship-side access control database (6), to a shore-side server (3), operatively connected to the shore-side access control database (4); and
updating (46) the ship-side access control database (6) with the shore-side modifications.

3. The method according to claim 2, wherein the ship-side modifications are any modifications in the ship-side access control database (6) since the most recent ship modifications message (21) was sent to the shore-side server (3).

4. The method according to claim 2 or 3, wherein, in the shore-side access control database (4) and in the ship-side access control database (6), each entry defining an access right for a key for a lock comprises a timestamp, and for all such entries associated with a single booking, the timestamps are identical.

5. The method according to according to any one of claims 2 to 4, further comprising:
obtaining (50) a public key associated with the shore-side server (3);
encrypting (52) access right generation data, usable to generate access rights for locks under control of the ship-side server (5), wherein the encryption is based on the public key, yielding encrypted access right generation data; and
transmitting (54) the encrypted access right generation data (26) to the shore-side server (3).

6. A ship-side server (5) for synchronising data between a shore-side access control database (4) and a ship-side access control database (6), the ship-side server (5) being configured to be operatively connected to the ship-side access control database (6), the ship-side server (5) comprising:
processing circuitry (60); and
memory circuitry (64) storing instructions (67) that, when executed by the processing circuitry, cause the ship-side server (5) to:
determine any modifications to data in the ship-side access control database (6);
receive a shore modifications message (20) from a shore-side server (3), the shore modifications message (20) indicating modifications to data in the shore-side access control database (4);
transmit a ship modifications message (21), indicating the modifications to data in the ship-side access control database (6), to a shore-side server (3), operatively connected to the shore-side access control database (4); and
update the ship-side access control database (6) with the shore-side modifications.

7. A computer program (67, 91) for synchronising data between a shore-side access control database (4) and a ship-side access control database (6), the computer program comprising computer program code which, when executed on a ship-side server (5) operatively connected to the ship-side access control database (6), causes the ship-side server (5) to:
determine any modifications to data in the ship-side access control database (6);
receive a shore modifications message (20) from a shore-side server (3), the shore modifications message (20) indicating modifications to data in the shore-side access control database (4);
transmit a ship modifications message (21), indicating the modifications to data in the ship-side access control database (6), to a shore-side server (3), shore-side server (3), operatively connected to the shore-side access control database (4); and
update the ship-side access control database (6) with the shore-side modifications.

8. A computer program product (64, 90) comprising a computer program according to claim 7 and a computer readable means comprising non-transitory memory in which the computer program is stored.

9. A method for synchronising data between a shore-side access control database (4) and a ship-side access control database (6), the method being performed by a shore-side server (3), operatively connected to the shore-side access control database (4), the method comprising:
determining (140) any modifications to data in the shore-side access control database (4);
transmitting (142) a shore modifications message (20), indicating the modifications to data in the shore-side access control database (4), to a ship-side server (5), operatively connected to the ship-side access control database (6);
receiving (144) a ship modifications message (21) from a ship-side server (5), the ship modifications message (21) indicating the modifications to data in the ship-side access control database (6); and
updating (146) the shore-side access control database with the ship-side modifications.

10. The method according to claim 9, wherein the shore-side modifications are any modifications in the shore-side access control database (4) since the most recent shore modifications message (20) was sent to the ship-side server (5).

11. The method according to claim 9 or 10, wherein, in the shore-side access control database (4) and in the ship-side access control database (6), each entry defining an access right for a key for a lock comprises a timestamp, and for all such entries associated with a single booking, the timestamps are identical.

12. The method according to according to any one of claims 9 to 11, further comprising:
providing (150), to the ship-side server (5), a public key associated with the shore-side server (3); and
receiving (154) encrypted access right generation data from the ship-side server (5), the access right generation data being encrypted with the public key associated with the shore-side server (3).

13. A shore-side server (3) for synchronising data between a shore-side access control database (4) and a ship-side access control database (6), the shore-side server (3) being configured to be operatively connected to the shore-side access control database (4), the ship-side access control database (6) comprising:
processing circuitry (60); and
memory circuitry (64) storing instructions (67) that, when executed by the processing circuitry, cause the ship-side access control database (6) to:
determine any modifications to data in the shore-side access control database (4);
transmit a shore modifications message (20), indicating the modifications to data in the shore-side access control database (4), to a ship-side server (5), operatively connected to the ship-side access control database (6);
receive a ship modifications message (21) from a ship-side server (5), the ship modifications message (21) indicating the modifications to data in the ship-side access control database (6); and
update the shore-side access control database with the ship-side modifications.

14. A computer program (67, 91) for synchronising data between a shore-side access control database (4) and a ship-side access control database (6), the computer program comprising computer program code which, when executed on a shore-side server (3) operatively connected to the shore-side access control database (4), causes the shore-side server (3) to:
determine any modifications to data in the shore-side access control database (4);
transmit a shore modifications message (20), indicating the modifications to data in the shore-side access control database (4), operatively connected to the ship-side access control database (6);
receive a ship modifications message (21) from a ship-side server (5), the ship modifications message (21) indicating the modifications to data in the ship-side access control database (6); and
update the shore-side access control database with the ship-side modifications.

15. A computer program product (64, 90) comprising a computer program according to claim 14 and a computer readable means comprising non-transitory memory in which the computer program is stored.
